Europäisches Patentamt

European Patent Office (11) Publication number: **0 037 636**

Office européen des brevets A2

(12) **EUROPEAN PATENT APPLICATION**

(21) Application number: **81300906.5**

(22) Date of filing: **04.03.81**

(51) Int. Cl.³: **C 09 D 3/74**
C 08 L 27/06, D 06 M 15/32

(30) Priority: **21.03.80 GB 8009673**

(43) Date of publication of application:
**14.10.81 Bulletin 81/41**

(84) Designated Contracting States:
**AT BE CH DE FR GB IT LI LU NL SE**

(71) Applicant: **Elson and Robbins Limited**
**Bennett Street**
**Long Eaton Nottingham NG10 4HL(GB)**

(72) Inventor: **Earnshaw, Michael Reginald**
**60 Newbury Avenue**
**Long Eaton Nottingham(GB)**

(72) Inventor: **Glenn, John**
**Flat 3 30 Magdala Road**
**Mapperley Nottingham(GB)**

(74) Representative: **Dealtry, Brian et al,**
**Eric Potter & Clarkson 14, Oxford Street**
**Nottingham NG1 5BP(GB)**

(54) **Rendering substrates fire retardant.**

(57) Substrates such as foam and wadding are rendered fire retardant by a method which comprises coating the substrate with an effective fire retardant amount of a plastisol and then curing the plastisol coating, conveniently by heating, on the substrate. The resin component of the plastisol is preferably P.V.C. or a P.V.C copolymer and the plasticiser component thereof advantageously includes both a primary and a secondary plasticiser. The plastisol optionally may also include viscosity depressants, foaming agents, stabilisers, fire retardants, fillers, extenders and/or curing agents. The method is particularly suitable for rendering materials used in furniture such as chairs and bedding fire retardant.

"RENDERING SUBSTRATES FIRE RETARDANT"

The present invention relates to rendering substrates fire retardant, and more particularly relates to a method of rendering a substrate fire retardant by curing a plastisol coating thereon, to substrates rendered fire retardant by the method, and to articles made from such substrates.

According to the present invention there is provided a method of rendering a substrate fire retardant which comprises the steps cf:-

(i)   coating the substrate with an effective fire retardant amount of a plastisol; and then

(ii) curing the plastisol coating on the substrate.

The resin component of the plastisol used in the method of the present invention is preferably polyvinyl chloride or a polyvinyl chloride copolymer such as polyvinyl chloride/ polyvinyl acetate, although other suitable polymers or copolymers may be used, optionally in the form of suspension resins.

The plasticiser component of the plastisol used in the present invention may be any of those well known in the art for forming plastisols such as dialkyl phthalates, for example Linevol phthalate and phosphate plasticisers, for example tricresyl phosphate. Advantageously, the ₓplasticiser component consists of both a primary and a secondary plasticiser. Suitable secondary plasticisers are Cereclor compounds (the word "Cereclor" is a Registered Trade Mark), i.e. a series of secondary plasticisers made from chlorinated waxes. In particular, it has been found that a plasticiser consisting of a 50:50 mixture of Linevol phthalate and Cereclor S45 (45% chlorine) is very suitable as a plasticiser component for a plastisol having P.V.C. resin as the resin component.

The plastisol used in the method of the present invention may also contain other components in addition to those discussed above such as stabilisers, for instance heavy metal soaps, e.g. Ferro RD 673, fillers such as talc and chalk, extenders, for example chlorinated esters and hydrocarbons, and also with particular advantage fire retardants, foaming (blowing) agents and/or viscosity depressants.

The incorporation of fire retardant compounds enables effective fire retardancy to be obtained with a thinner coating of plastisol than would be needed if fire retardant compounds were not incorporated. Suitable fire retardant compounds for use in the method of the present invention are, for example, ammonium chloride, antimony oxide and/or aluminium hydroxide, preferably aluminium hydroxide.

The inclusion of foaming agents such as azo foaming agents and viscosity depressants such as trichloroethylene in the plastisol used in the method of the present invention affords two advantages. Firstly, a foaming agent enables the production of a permeable coating on the substrate after curing, and this is of particular advantage if the substrate to be coated is itself a foam since treatment thereof by the method of the present invention using a plastisol comprising a foaming agent helps to maintain the inherent "feel" and ventilation/breathable properties of foam such as would be used in for example cushions. Secondly,a viscosity depressant lowers the viscosity of the plastisol, and incorporation of a sufficient amount thereof enables the plastisol to be applied to the surface to be coated by spraying rather than by applying it by roller coating or doctoring with, for example, a spatula or a doctor blade. Consequently thinner coatings are possible. One compound may fulfil the functions of both foaming agent and viscosity depressant,although separate compounds may be used , and it has been found that fluorocarbons such as Arcton 11 (trichlorofluoromethane) are particularly suitable compounds for fulfilling both of the aforementioned functions.

Curing of the coating applied to the substrate is generally carried out by heating the coating to an elevated temperature, such as $160^{\circ}$C, in for example an oven, for instance an air circulating oven or a radio frequency oven although curing may be effected by the use of a chemical curing agent in the plastisol coating.

Although the method of the present invention may be used to render any substrate fire retardant, the method is particularly suitable for rendering materials used in furniture such as chairs and bedding fire retardant, particularly to such a degree that the treated articles are at least capable of passing the smouldering cigarette test B.S. 5852 part 1 (1979). Thus, for instance, cushions made from such materials as polyether or ployurethane foams which are to be used in for example chairs, may be treated in accordance with the method of the present invention to render them fire retardant. In a preferred embodiment, the method basically involves incorporating flame retardant substances onto the surface of the cushion to be treated in a permanent manner, using a thin permeable cured coating of P.V.C. Instead of coating the surface of the cushion itself, one or both sides of any intermediate layers such as fibre padding used in the construction of a completed cushion may be coated in accordance with the method of the present invention, or alternatively, the reverse side of any cloth used to cover the cushion may be so treated.

In general it has been found that a substrate treated in accordance with the present invention will pass the above mentioned British Standard Test B.S.5852 part 1 (1979) if a coating thickness of plastisol of about 0.039 $gm/cm^2$ (0.25 $gm/in^2$) is used when the plastisol contains no specific fire retardant agents, and if a coating thickness of from 0.0214 $gm/cm^2$ (0.14 $gm/in^2$) to 0.026 $gm/cm^2$ (0.17 $gm/in^2$) is used when the plastisol does contain a fire retardant agent such as ammonium chloride.

The present invention will now be further illustrated with reference to the following Examples. In the Examples, the abbreviation "phr" means parts by weight per hundred parts by weight of the resin component.

Example 1

A P.V.C. plastisol was made up by mixing the following components in a Kenwood mixer:-

| | |
|---|---|
| P.V.C. resin (Breon P130/3) | 100 phr |
| Plasticiser (Linevol phthalate/Cereclor S45-50/50 ) | 60 phr |
| Stabiliser (Ferro RD 673) | 1 phr |

The above mix was applied to the surface of a polyurethane foam cushion by doctoring using a spatula at a coating thickness equivalent to 0.039 gm/cm$^2$ (0.25 gm/in$^2$). Having thus coated the cushion, the mix was cured at a temperature of 160$^{\circ}$C to obtain a polyurethane foam cushion having a cured coating. The thus treated cushion was covered with a standard cover material and this assembly was then tested in accordance with B.S. 5852 part 1 (1979). It was found that the assembly passed the smouldering cigarette test, even when an untreated fibre padding was placed in between the treated cushion and the cover material.

Example 2

A P.V.C. plastisol was made up by mixing the following components in a Kenwood mixer:-

| | |
|---|---|
| P.V.C. resin (Breon P130/3) | 100 phr |
| Plasticiser (Linevol Phthalate /cereclor S45-50/50) | 60 phr |
| Stabiliser (Ferro RD 673) | 1 phr |
| Arcton 11 | 20 phr |

The above mix was applied to the surface of a polyether foam cushion by spraying at a coating thickness equivalent to 0.039 gm/cm$^2$ (0.25 gm/in$^2$). Having thus coated the cushion the mix was cured at 160$^{\circ}$C in an air circulating oven to obtain a polyether foam cushion having a cured coating.

The Arcton 11 acted not only as a viscosity depressant thereby allowing the mix to be sprayed rather than doctored, but also as a blowing agent, making the resultant P.V.C. coating slightly cellular and air permeable. The thus treated cushion was covered with a standard cover material and this assembly was then tested in accordance with B.S. 5852 part 1 (1979). It was found that the assembly passed the smouldering cigarette test, even when an untreated fibre padding was placed in between the treated cushion and the cover material.

Example 3

A P.V.C. plastisol was made up by mixing the following components in a Kenwood mixer:-

| | |
|---|---|
| P.V.C. resin (Breon P130/3 ) | 100 phr |
| Plasticiser (Linevol phthalate/Cereclor S45-50/50) | 60 phr |
| Stabiliser (Ferro RD 673) | 1 phr |
| Arcton 11 | 20 phr |
| Ammonium Chloride | 20 phr |

The above mix was applied to the surface of a polyether foam cushion by spraying at a coating thickness equivalent to 0.026 gm/cm$^2$ (0.17 gm/in$^2$). Having thus coated the cushion the mix was cured at 160$^{\circ}$C in an air circulating oven to obtain a polyether foam cushion having a cured coating. As in Example 2, the Arcton 11 acted not only as a viscosity depressant thereby allowing the mix to be sprayed rather than doctored, but also as a blowing agent, making the resultant P.V.C. coating slightly cellular and air permeable. The thus treated cushion was covered with a standard cover material and this assembly was then tested in accordance with B.S. 5852 part 1 (1979). It was found that the assembly passed the smouldering cigarette test, even when an untreated fibre padding was placed in between the treated cushion and the cover material.

In addition, it was found that the ammonium chloride, which is water soluble, was not completely removed from the coated cushions by autoclaving, and in fact cushions tested after autoclaving for three hours still passed the aforementioned smouldering cigarette test.

EXAMPLE 4

A P.V.C. plastisol was made up by mixing the following components in a Kenwood mixer:-

| | |
|---|---|
| P.V.C. resin (Breon P130/3) | 100 phr |
| Plasticiser (Linevol phthalate/Cereclor S45-50/50) | 60 phr |
| Stabliser (Ferro RD 673) | 1 phr |
| Arcton 11 | 20 phr |
| Aluminium Hydroxide | 15 phr |

The above mix was applied to the surface of a polyether foam cushion by spraying at a coating thickness equivalent to 0.0214 gm/cm$^2$ (0.14 gm/in$^2$). Having thus coated the cushion, the mix was cured at 160$^{\circ}$C in an air circulating oven to ob to obtain a polyether foam cushion having a cured coating. As in Examples 2 and 3, the Arcton 11 acted not only as a viscosity depressant thereby allowing the mix to be sprayed rather than doctored, but also as a blowing agent, making the resultant P.V.C coating slightly cellular and air permeable. The thus treated cushion was covered with a standard cover material and this assembly was then tested in accordance with B.S. 5852 part 1 (1979). It was found that the assembly passed the smouldering cigarette test, even when an untreated fibre padding was placed in between the treated cushion and the cover material. Moreover, it was found that aluminium hydroxide resisted removal by autoclaving.

EXAMPLE 5

A P.V.C. plastisol was made up by mixing the following components in a Kenwood Mixer:-

| | |
|---|---|
| P.V.C. resin (Breon P130/3) | 100 phr |
| Plasticiser (Linevol Phthalate/Cereclor) 545 - 50/50 | 60 phr |

Stabiliser (Ferro RD 673)                              1 phr

Antimony Oxide                                        10 phr

The above was applied to the surface of a polyurethane foam cushion by doctoring using a spatula at a coating thickness equivalent to 0.039 gm/cm$^2$ (0.25 gm/in$^2$). Having thus coated the cushion, the mix was cured at a temperature of 160$^{\circ}$C to obtain a polyurethane foam cushion having a cured coating. The thus treated cushion was covered with a standard cover material and this assembly was then tested in accordance with B.S. 5852 part 1 (1979). It was found that the assembly passed the smouldering cigarette test, even when an untreated fibre padding was placed in between the treated cushion and the cover material. Moreover it has been found that plastisols including antimony oxide when used in the method of the present invention, as is the case with this particular Example, are particularly useful and effective when the substrate which is to be rendered fire retardant is composed of fibres or is fibrous in nature such as waddings based on, for example polyester and/or acrylic fibres.

In addition to the above it was found that identical foam cushions to those used in Examples 1 to 5 above when covered with the standard material used in Examples 1 to 5 did not pass the smouldering cigarette test B.S. 5852 part 1 (1979) if they were not treated in accordance with the method of the present invention.

CLAIMS

1. A method of rendering a substrate fire retardant which comprises the steps of:-

(i) coating the substrate with an effective fire retardant amount of a plastisol; and then

(ii) curing the plastisol coating on the substrate.

2. A method as claimed in Claim 1 characterised in that the resin component of the plastisol is polyvinyl chloride or a polyvinyl chloride copolymer, optionally in the form of a suspension resin.

3. A method as claimed in Claim 1 or Claim 2 characterised in that the plasticiser component of the plastisol includes a primary and a secondary plasticiser.

4. A method as claimed in any of Claims 1 to 3 characterised in that the plastisol includes a stabiliser.

5. A method as claimed in any of Claims 1 to 4 characterised in that the plastisol includes a fire retardant compound.

6. A method as claimed in any of Claims 1 to 5 characterised in that the plastisol includes a foaming agent.

7. A method as claimed in any of Claims 1 to 6 characterised in that the plastisol includes a viscosity depressant.

8. A method as claimed in any of Claims 1 to 6 characterised in that the plastisol includes a compound which fulfils the functions of both a foaming agent and a viscosity depressant.

9. A method as claimed in any of Claims 1 to 8 characterised in that the plastisol coating is cured by heating.

10. A method as claimed in any of Claims 1 to 9 characterised in that the substrate is a wadding based on fibres, or a foam.